Europäisches Patentamt

**European Patent Office**

Office européen des brevets

(11) Publication number:

**0 109 254**
A2

(12) **EUROPEAN PATENT APPLICATION**

(21) Application number: 83306818.2

(22) Date of filing: 09.11.83

(51) Int. Cl.³: **H 01 S 3/11, H 01 S 3/098**

(30) Priority: 13.11.82 GB 8232263

(43) Date of publication of application: **23.05.84**
**Bulletin 84/21**

(84) Designated Contracting States: **CH DE FR GB IT LI NL**

(71) Applicant: **Koo, Yuk Wah Joseph, 37 Worcester Street,**
**Rugby, CV21 2NF (GB)**
Applicant: **Hanna, David Colin, 128 Dean Road, Bitterne**
**Southampton (GB)**

(72) Inventor: **Koo, Yuk Wah Joseph, 37 Worcester Street,**
**Rugby, CV21 2NF (GB)**
Inventor: **Hanna, David Colin, 128 Dean Road, Bitterne**
**Southampton (GB)**

(74) Representative: **Waite, Anthony William et al, T. Fletcher**
**Wilson 10 Grosvenor House Grosvenor Road, Coventry**
**CV1 3FZ (GB)**

(54) **Single mode pulsed laser.**

(57) A single mode pulsed laser comprises an optical cavity formed between a totally reflecting mirror (10) and a resonant reflector (11). The cavity further includes an Nd YAG rod (12) supplied with pumping pulses from a flash tube (20), a shutter formed from a polariser (15) and a Pockels cell (16), an etalon (17), and a telescope (18). Light reflected by the polariser (15) is detected by a photodiode (D1) which provides an input signal to a trigger circuit (33) for the Pockels cell (16). At the commencement of each pumping pulse, the shutter is slightly open. When a relaxation pulse having no significant mode beating is detected, the trigger circuit (22) opens the shutter to permit generation of a giant laser pulse.

EP 0 109 254 A2

COMPLETE DOCUMENT

This invention relates to a laser for producing single mode pulses using a Q-switch shutter.

A technique of opening the Q-switch shutter of a laser in two steps to allow the slow build-up of a pre-lase pulse has been described in Opto-Electronics, 1971, Number 3, page 163, and a technique of automatic generators of a pre-lase pulse which is monitored and used to initiate the Q-switch step has been described in Electronics Letters, Volume 8, Number 15, page 369, and in Optics Communications, Volume 40, Number 1, page 54. This latter technique involves deliberately leaving the Q-switch shutter slightly open to allow the laser oscillation to grow at a low intensity level over very many resonator transits. This permits selection of the mode with highest gain and after this has been achieved the Q-switch is fully opened to allow growth to full intensity. A very large degree of mode selection can be achieved in this way and it is easy to ensure that the majority of pulses are single mode. However, this technique alone is insufficient to prevent generation of some pulses which suffer from significant mode beating as any uncontrolled drifts of resonant length and hence of mode frequency will lead occasionally to the situation where two resonator modes have nearly equal net gain. Although it might be possible to overcome this problem with thermal stabilisation, this is a costly and elaborate procedure.

It is an object of this invention to provide a new or improved Q-switched laser in which the production of pulses having any significant mode beating is prevented.

According to this invention there is provided a laser comprising an optical cavity provided with active material and an electronically controllable Q-switch

0109254

shutter, means for applying pumping pulses to the active material, a photodetector positioned to sense laser pulses, and a trigger circuit responsive to the photodetector arranged to open the shutter upon detecting a pre-lase pulse having no significant mode beating.

The optical cavity may include mode selecting means.

In order to ensure the generation of a laser pulse having no significant mode beating for each pumping pulse, the apparatus may be arranged so that the optical length of the cavity is swept at a sufficiently high rate for single mode conditions to be achieved at some time during each pumping pulse.

Thus, in an apparatus according to this invention one or more pre-lase pulses will be generated for each pumping pulse and the Q-switch shutter will be opened upon detection of a pre-lase pulse having no significant mode beating.

This invention will now be described in more detail, by way of example, with reference to the accompanying drawings in which:-

Figure 1 shows the overall arrangement of a laser embodying this invention;

Figures 2 to 4 together form a detailed circuit diagram of the trigger circuit forming part of the laser of Figure 1; and

Figure 5 is a set of graphs for illustrating the optical properties of an etalon forming part of the laser.

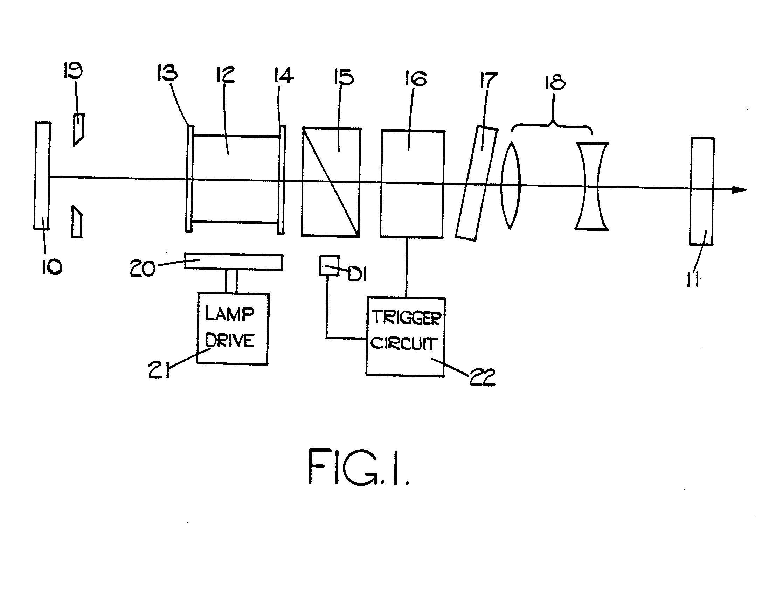

The laser shown in Figure 1 comprises an optical cavity formed between a totally reflecting mirror 10 and an output mirror 11 in the form of a 6mm thick uncoated resonant reflector which has been held in an oven at an appropriate temperature to bring the reflection maximum to the centre of the laser gain profile. The cavity contains an Nd:YAG rod 12 having a diameter of 6mm and provided with $\lambda$/4 plates 13 and 14 to eliminate spacial hole burning, a polariser 15, a Pockels cell 16, a 1cm thick intra-cavity etalon 17 formed from fused silica with faces having 74% reflectivity and tilted to match its transmission maximum to the reflection maximum of the resonant reflector, a telescope 18 having a magnification factor of 3, and an aperture 19 for selecting the $TEM_{00}$ mode. The polariser 15 and Pockels cell 16 together operate as a Q-switch shutter. The overall optical length is 1.2m. The optical arrangement described in Figure 1 is essentially a modification of that described in Optics Communications, Volume 40, Number 1, page 54, and also in Optics Communications, Volume 37, page 359.

The Nd:YAG rod 12 is provided with pumping pulses by a conventional flash tube 20 driven by a conventional flash tube lamp drive circuit 21. The laser further includes a photodetector in the form of a type HP50824220 photodiode D1 which is positioned to sense the light rejected by the polariser 15. The photodiode D1 is connected to the input of a trigger circuit 22 which applies a drive voltage to the pockel cell 16.

The polariser 15 is arranged so that it only transmits the horizontal polarisation. Before the commencement of each pumping pulse, a voltage is applied to the Pockels cell 16 so that light which is incident on this cell from the left will be returned to the polariser 15 with only a small component of horizontal polarisation. The remainder of the returning light will be rejected by the polariser and then be detected by the photodiode Dl. As will be explained in more detail, oscillation in the laser takes the form of a train of relaxation pulses. Each pulse in turn is monitored to see whether mode beating is present. Mode beating is caused by two modes having nearly equal gain and thus comparable intensities. If such mode beating is observed to be present, the voltage to the pockel cell 16 is maintained and so the Q-switch shutter is not opened. When a pulse is detected which does not have mode beating, the voltage to the Pockels cell is removed thereby opening the Q-switch shutter and permitting the generation of a giant laser pulse. The explanation for the eventual appearance of a beat free pulse lies in the fact that the optical resonant length is swept as a result of heat generated in the laser rod 12 by the pumping process. Thus, a beat free giant laser pulse is produced for each pumping pulse.

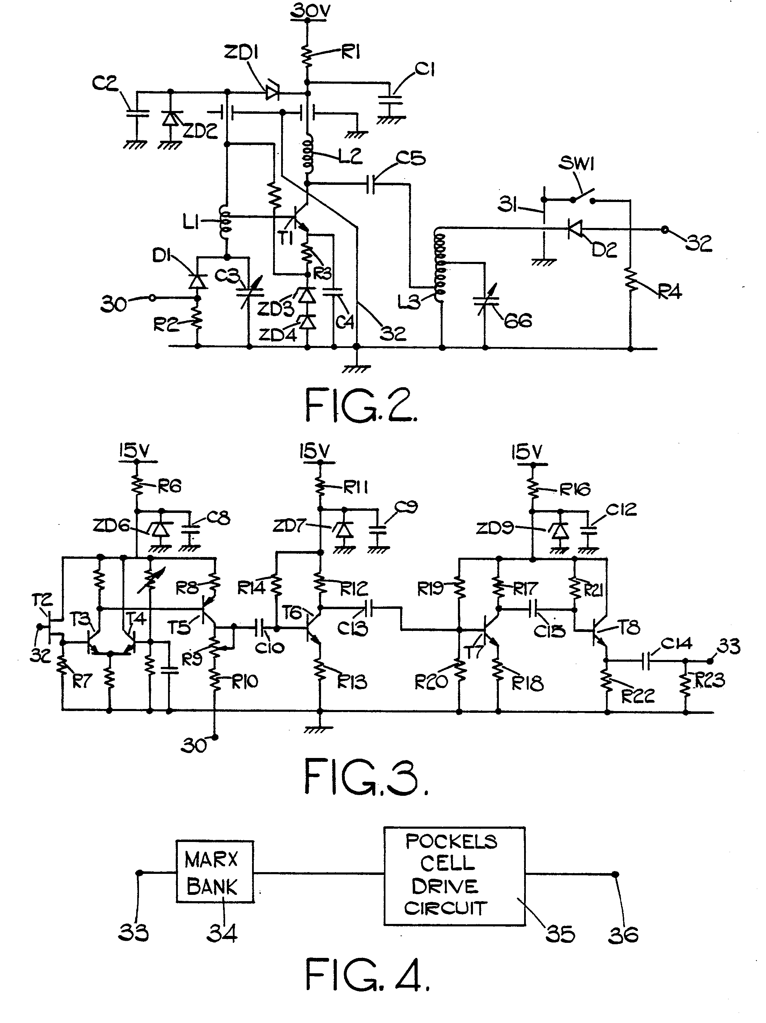

The trigger circuit 22 will now be described in more detail with reference to Figures 2 to 4. Turning firstly to Figure 2, a 30V rail is connected through a resistor R1 and a capacitor C1 to earth and the junction of these two components is connected to the cathode of a 3.7V zener diode ZD1. The anode of this diode is connected through a 22V zener diode ZD2 to earth, this diode being bridged by a capacitor C2. The anode of zener diode ZD1 is also connected through an inductor L1 and a variable capacitor C3 to earth, the capacitor C3 being bridged by the photodiode D1 and a resistor R2. The junction of diode D1 and resistor R2 is connected to a terminal 30. A tapping on inductor

L1 is connected to the base of a transistor T1, the collector of which is connected through a radio frequency choke L2 to the cathode of zener diode ZD1 and the emitter of which is connected through a resistor R3 and a pair of 10V zener diodes ZD3, ZD4 to earth, resistor R3 and diodes ZD3 and ZD4 being bridged by a capacitor C4. The collector of transistor T1 is connected through a capacitor C5 to a tapping on an inductor L3, one end of which is connected directly to earth and the other end of which is connected through a diode D2 and a resistor R4 to earth. Another tapping on inductor L3 is connected through a variable capacitor C6 to earth. The anode of diode D2 is connected through a normally open switch SW1 and a screen 31 to earth, the screen 31 serving to screen diode D2 from radio frequency radiation. The inductor L1 and capacitor C3 and the inductor L3 and capacitor C6 each form a tuned circuit and these tuned circuits are screened from each other by a screen 32.

Transistor T1 and the associated components serve to amplify a mode beating signal detected by the diode D1. In the present example, such a mode beating signal will have a frequency of 125MHz. The tuned circuits L1, C3 and L3, C6 act as band pass filters and these are tuned to this frequency. The diode D2 acts as a rectifier and, if mode beating is detected, a negative signal appears at terminal 32.

Turning now to Figure 3, a 15V rail is connected through a resistor R6 and a 10V zener diode ZD6 to earth, the zener diode ZD6 being bridged by a capacitor C8. The cathode of zener diode ZD6 is connected to the drain of a field effect transistor T2, the source of which is connected through a resistor R7 to earth, and the gate of which is connected to terminal 32. The source of transistor T2 is connected to the base of a transistor T3 which together with a transistor T4 and associated components forms a differential amplifier. The quiescent current of the amplifier is set by adjusting the base voltage of transistor T4. The collector of transistor T3 is connected to the base of a transistor T5, the emitter of which is connected through a resistor R8 to the cathode of zener diode ZD6 and the collector of which is connected through a variable resistor R9 acting as a gain control and a resistor R10 to terminal 30.

In operation, each relaxation pulse is detected by the diode D1, and, if there is no mode beating, a positive pulse appears at the collector of transistor T5. However, if mode beating is present, the negative going pulse at terminal 32 is amplified by transistors T2 to T5 thereby cancelling the positive going pulse of the collector of transistor T5. Thus, transistors T2 to T5 and their associated components operate as a gate.

The 15V rail is further connected through a resistor R11 and a zener diode ZD7 to earth, the zener diode ZD7 being bridged by a capacitor C9. The cathode of zener diode ZD7 is connected through a resistor R12 to the collector of a transistor T6, the emitter of which is connected through a resistor R13 to earth. The collector of transistor T5 is connected through a coupling capacitor C10 to the base of transistor T6 and the base of transistor T6 is also connected through a bias resistor R14 to the cathode of zener diode ZD7.

The 15V rail is also connected through a resistor R16 and a zener diode ZD9 to earth, the zener diode ZD9 being bridged by a capacitor C12. The cathode of zener diode ZD9 is connected through a resistor R17 to the collector of a transistor T7, the emitter of which is connected through a resistor R18 to earth. The cathode of zener diode ZD9 is also connected through a pair of resistors R19, R20 to earth and the junction of these resistors is connected to the base of transistor T7. The base of transistor T7 is also connected to the collector of transistor T6 through a coupling capacitor C13. The cathode of zener diode ZD9 is connected through a resistor R21 to the base of a transistor T8, the base also being connected through a capacitor C15 to the collector of transistor T7. The emitter of transistor T8 is connected through a resistor R22 to earth, the resistor R22 being bridged by a capacitor C14 and a resistor R23. The junction of capacitor C14 and resistor R23 is connected to a terminal 33.

In operation, if a positive going pulse appears at the collector of transistor T5 this is amplified by transistors T6 to T8 and the amplified pulse appears at terminal 33.

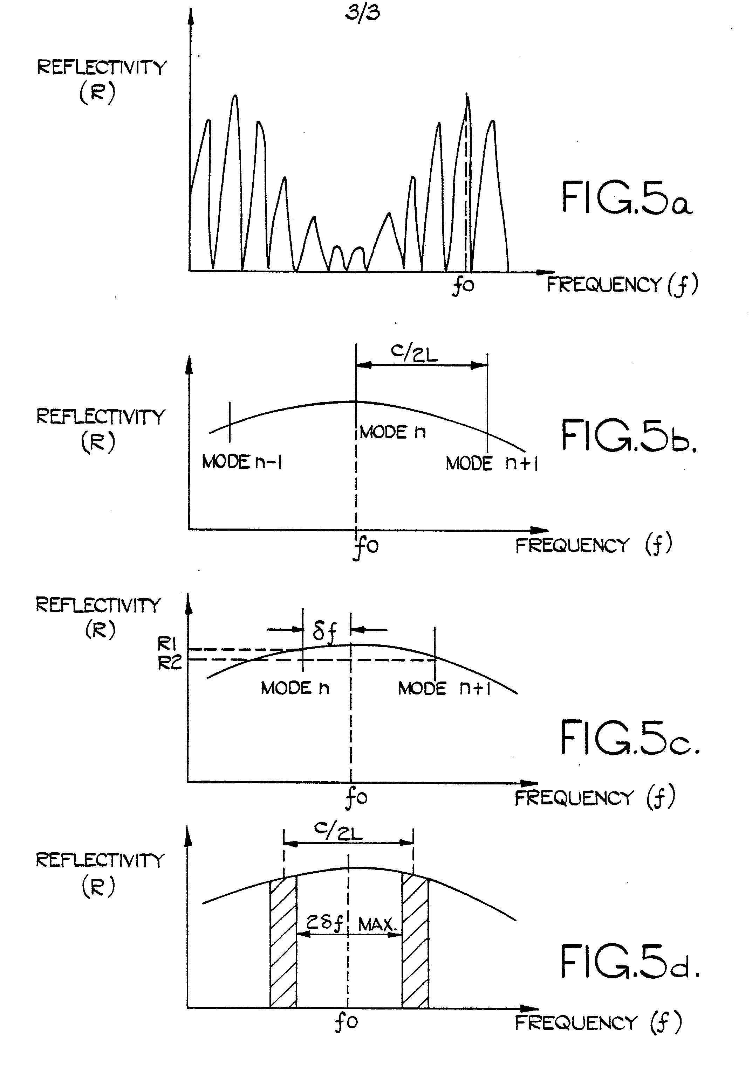

As shown in Figure 4, terminal 33 is connected to the input of a Marx bank 34, the output of which is connected to the input of a conventional pockels cell drive circuit 35. The Marx bank 34 can only be triggered by a positive going pulse. The output terminal 36 of this circuit is connected to one of the terminals of the Pockels cell 16 of Figure 1.

As mentioned previously, before each pumping pulse, the drive circuit 35 applies a voltage to the Pockels cell such that the light returned to the polariser 15 contains a small component of horizontal polarisation. Subsequently, if a relaxation pulse is detected by diode D1 in which mode beating is present, no positive going pulse appears at terminal 33 and so this voltage is maintained. However, if a pulse is detected in which there is no appreciable mode beating, a positive pulse is generated at terminal 33 which in turn triggers the Marx bank 34 and Marx bank 34 triggers the drive circuit 35 which then removes the voltage from the pockel cell 16 and so a giant laser pulse is generated.

In practice, there will be some degree of mode beating in all relaxation pulses and each such pulse will usually take the form of oscillation at the dominant mode modulated at the inter-mode frequency. Although the present invention cannot completely eliminate such modulation from the giant laser pulse, it can ensure that such pulses are free from any significant mode beating. The level of permitted modulation may be controlled by adjusting resistor R9.

If it is desired to operate the apparatus as shown in Figures 1 to 4 without inhibiting pulses having mode beating, the switch SW1 is closed.

As mentioned above, for the laser to operate in a single mode so that a beat free pulse is produced the resonator length must change at a sufficiently high rate to ensure that at some time during each flash lamp pulse the appropriate conditions for single mode operations are achieved. In the example shown in Figures 1 to 4, the resonator length changes as a result of heat absorbed by the Nd:YAG rod 12 and it will now be demonstrated that the length changes at a sufficiently high rate to achieve single mode conditions during each flash lamp pulse. In order to do this, a calculation is made of the range of resonator lengths over which two modes have net gains sufficiently close that single mode operation is not achieved and an estimation will then be made of the change of length that occurs under normal operating conditions. This change of length will be seen to be sufficient to ensure that the resonator length is at some time swept out of the range within single mode does not occur.

The action of the mode selector may be represented by a mirror having frequency-dependent reflectivity R. In the present example, the mode selector takes the form of a combination of etalon 17 and resonant reflector 11 the reflection properties of an equivalent mirror are shown in Figure 5$\underline{a}$. By adjusting the tilt angle of the etalon it may be arranged that there is one dominant reflection maximum at the maximum gain of the laser. In Figure 5$\underline{a}$ this reflection maximum occurs at a frequency $f_o$.

In Figure 5$\underline{b}$ there is shown the ideal situation where one mode (mode n) occurs at this maximum. Adjacent modes are separated by a frequency difference $C/2L$, where C is the velocity of light and L is the optical length of the cavity. In Figure 5$\underline{c}$ there is shown the situation where mode n is detuned by an amount $\delta f$. The ratio of the powers $P_n/P_{n+1}$ of the two modes n and n+1 after q round trips is

$$P_n/P_{n+1} = (R1/R2)^q \dots\dots\dots\dots\dots\dots\dots\dots(1)$$

where R1 and R2 are the respective reflectivities of the two modes.

The frequency behaviour of the reflectivity may be represented by $R = 1 - a(\delta f)^2$ where a is a constant and hence equation (1) may be approximate by

$$P_n/P_{n+1} = [1 + a(C/2L)\cdot(C/2L - 2\delta f)]^q \dots\dots(2)$$

If the criterion for single mode operation is stated as the ratio $P_n/P_{n+1}$ exceeding a value N, equation (2) may be used to determine the maximum detuning $\delta f_{max}$ before the single mode criterion is violated. This gives

$$\delta f_{max} / (C/2L) = 1/2 + [1-N^{1/q}] \, 2L^2/ac^2$$
$$\approx 1/2 - (\ln N)\cdot(1/q)\cdot(2L^2/ac^2) \ldots(3)$$

In Figure 5d the range of mode frequencies for which two mode operation will occur is indicated by the hatched regions. The width of each hatched region is given by $C/2L - 2\delta f_{max}$. Thus if a pre-lase oscillation pulse shows two mode operation, it requires only a resonant length change of $[1 - 4\cdot\delta f_{max}\cdot L/C]\cdot\lambda/2$ to shift the frequency out the hatched region.

In the arrangement shown in Figure 1, the etalon parameters imply a value for a given by $(C/2L)^2 = 0.126$. To avoid mode beating having an intensity modulation greater than 1%, N is set to $10^5$ and q is estimated to be 1000. If these values and the other parameter for the example of Figure 1 are inserted into equation (3), they yield $\delta f_{max}/(C/2L) = 0.45$. Thus, a resonant length change of only $0.05\lambda$ is necessary to pass from two mode operation to the condition for single mode operation.

The rate of change of resonant length dL/dt is given by
$$dL/dt = [d\mu/dT + (\mu - 1)\ell^{-1} \, d\ell/dT] \, E/(\tau\rho\sigma\pi r^2) \ldots(4)$$
where E represent the heat energy deposited in the laser rod in a time $\tau$, the rod having a length $\ell$, specific gravity $\rho$, specific heat $\sigma$ and refractive index $\mu$. T represents temperature.

0109254

It is estimated that 5% of the lamp energy is deposited in the rod and so for a 140µs flash lamp pulse of energy 32J the rate of change of resonant length is 2nm/µs. Thus, in a time of 30µs, which is sufficient for 4 or 5 pre-lase pulses, the resonator length changes by 0.06µm. On the above analysis, this is sufficient to change from two mode to single mode operation. In practice it is found necessary to allow up to 4 or 5 pre-lase pulses to guarantee generation of a beat free pulse for each flash lamp pulse. The number of pre-lase pulse is adjusted simply via the flash lamp energy or the pockels cell voltage.

The laser described above provides the advantage that a single mode laser pulse is produced for each flash lamp pulse without the need for thermal stabilisation of the optical cavity. The technique described above for obtaining beat free pulses may be applied to other lasers such as a ruby laser or a Nd:glass laser. Where the thermally induced rate of a change of resonator length is insufficiently great, for example where the thermal coefficient of the laser medium is less than for Nd:YAG, it may be necessary to deliberately introduce means for changing the resonator length and such means may take the form of a second Pockels cell. Alternatively steps can be taken to reduce the range of mode frequencies over which two mode operations will occur and one such approach would be to use a much shorter resonator length.

CLAIMS:

1. A laser comprising an optical cavity provided with active material and an electronically controllable Q-switch shutter, means for applying pumping pulses to the active material, a photodetector positioned to sense laser pulses, and a trigger circuit responsive to the photodetector arranged to open the shutter upon detecting a pre-lase pulse having no significant mode beating.

2. A laser as claimed in claim 1 in which the trigger circuit comprises a gate circuit responsive to the output of the photodetector, a bandpass filter responsive to the output of the photodetector, a rectifier responsive to the output of the filter, the output of the rectifier providing a control signal for the gate circuit, and a drive circuit for the shutter and which is responsive to the output of the gate circuit.

3. A laser as claimed in claim 1 or claim 2, in which the optical cavity includes mode selection means.

4. A laser as claimed in any one of the preceding claims arranged so that the optical length of the cavity is swept at a sufficiently high rate for single mode conditions to be achieved at some time during each pumping pulse.

5. A laser as claimed in claim 4, in which the length of the active material changes as a result of heat absorption at a sufficiently high rate during each pumping pulse to achieve single mode conditions.

FIG.1.

FIG.2.

FIG.3.

FIG. 4.

0109254

3/3

REFLECTIVITY (R) vs FREQUENCY (f)

FIG.5a

FIG.5b.

FIG.5c.

FIG.5d.